# EUROPÄISCHE PATENTANMELDUNG

(11) **EP 2 983 145 A1**
(43) Veröffentlichungstag der Anmeldung: **10.02.2016**
(21) Anmeldenummer: 14179909.8
(22) Anmeldetag: 05.08.2014
(51) Int. Cl.: G08B 17/00, G01C 21/20, G01S 1/68, G08B 25/04

(54) **Meldersockel und Anschlussbasis zur lösbaren Anbringung eines Gefahrenmelders mit jeweils einer Funkeinrichtung zum Aussenden von Positionsdaten des Montageorts des Meldersockels bzw. der Anschlussbasis und/oder eines Verweises auf diese Positionsdaten**

(71) Anmelder: Siemens Schweiz AG, 8047 Zürich (CH)
(72) Erfinder: Avak, Björn, 6340 Baar (CH); Frey, Christian, 6314 Unterägeri (CH); Künzli, Simon, Dr., 8400 Winterthur (CH); Zechlin, Oliver, 6300 Zug (CH)
(74) Vertreter: Maier, Daniel Oliver

(57) **Zusammenfassung**

Die Erfindung betrifft einen Meldersockel (1) zur Befestigung an einer Montagefläche (D), wobei der Meldersockel einen Anschluss (K) zum Anschliessen an einer Melderlinie (ML) einer Gefahrenmeldeanlage (100) sowie eine erste Anschlussseite (A1) zur lösbaren Anbringung eines als Punktmelder ausgebildeten Gefahrenmelders (3) aufweist. Die erste Anschlussseite ist elektrisch und konstruktiv auf eine zweite Anschlussseite (A2) eines derartigen Gefahrenmelders abgestimmt, sodass dieser am Meldersockel lösbar anbringbar und über diesen mittelbar an die Melderlinie anschliessbar ist. Erfindungsgemäss weist der Meldersockel eine Funkeinrichtung (10) zum Aussenden von Positionsdaten (POS) des Meldersockel-Montageorts und/oder eines Verweises (REF) auf eine Datenbank (TAB) mit diesen Positionsdaten (POS) auf. Die Funkeinrichtung basiert vorzugsweise auf einem Bluetooth Low Energy Standard. Die Erfindung betrifft weiterhin eine Anschlussbasis sowie eine Gefahrenmeldeanlage mit zumindest einem derartigen Meldersockel und/oder einer derartigen Anschlussbasis sowie eine geeignete Verwendung dieser zur Positionsbestimmung und Navigation in einem Gebäude.

## Beschreibung

Die Erfindung betrifft einen Meldersockel zur Befestigung an einer Montagefläche, typischerweise an einer Decke. Der Meldersockel weist einen elektrischen Anschluss zum Anschliessen des Meldersockels an einer Melderlinie einer Gefahrenmeldeanlage auf. Die Melderlinie, die auch als Melderbus bezeichnet wird, ist typischerweise als Zweidrahtleitung ausgeführt. Der Meldersockel umfasst zudem eine erste Anschlussseite zur vorzugsweise lösbaren Anbringung eines als Punktmelder ausgebildeten Gefahrenmelders. Die erste Anschlussseite ist dabei elektrisch und konstruktiv auf eine zweite Anschlussseite eines derartigen Gefahrenmelders abgestimmt, sodass dieser am Meldersockel vorzugsweise lösbar anbringbar und über diesen mittelbar an die Melderlinie anschliessbar ist.

Weiterhin betrifft die Erfindung eine Anschlussbasis zur Anbringung an einem Montagesockel sowie zur vorzugsweise lösbaren Anbringung eines als Punktmelder ausgebildeten Gefahrenmelders an der Anschlussbasis. Eine derartige Anschlussbasis wird im Sprachgebrauch auch als "Base" (englisch für Basis) bezeichnet. Sie kann alternativ auch als Zwischenbasis oder Zwischensockel bezeichnet werden. Der Montagesockel ist zum Befestigen an einer Montagefläche und zum Anschliessen an einer Melderlinie einer Gefahrenmeldeanlage vorgesehen. Die Anschlussbasis umfasst eine vierte Anschlussseite, welche elektrisch und konstruktiv auf eine dritte Anschlussseite des Montagesockels abgestimmt ist, sodass die Anschlussbasis am Montagesockel anbringbar und über diesen mittelbar an die Melderlinie anschliessbar ist. Die Anschlussbasis weist zudem eine erste Anschlussseite zur Anbringung eines derartigen Gefahrenmelders auf, wobei die erste Anschlussseite elektrisch und konstruktiv auf eine zweite Anschlussseite eines derartigen Gefahrenmelders abgestimmt ist, sodass dieser an der Anschlussbasis vorzugsweise lösbar anbringbar und über diese mittelbar an die Melderlinie anschliessbar ist.

Die Erfindung betrifft ausserdem eine Gefahrenmeldeanlage mit erweiterter Funktionalität zur möglichen funktechnischen Positionsbestimmung und Navigation eines Benutzers in einem Gebäude mittels eines hierzu geeigneten mobilen Kommunikationsendgerätes. Das mobile Kommunikationsendgerät ist vorzugsweise ein Smartphone, ein Tablet-Computer oder ein Notebook. Die Kommunikationsendgeräte sind vorzugsweise internetfähig, wie z.B. über WLAN oder über ein Mobilfunknetz. Sie weisen weiterhin vorzugsweise eine Bluetooth-Schnittstelle auf.

Schliesslich betrifft die Erfindung eine geeignete Verwendung derartiger Vorrichtungen zur Positionsbestimmung und Navigation eines Benutzers in einem Gebäude.

Die Erfindung wird gelöst mit den Merkmalen der beiden Hauptansprüche. Vorteilhafte Ausführungsformen sind in den abhängigen Ansprüchen genannt.

Erfindungsgemäss weist der Meldersockel bzw. die Anschlussbasis eine Funkeinrichtung zum Aussenden von Positionsdaten des Montageorts des Meldersockels bzw. der Anschlussbasis und/ oder zum Aussenden eines Verweises auf eine Datenbank mit diesen Positionsdaten auf.

Die gemeinsame erfinderische Idee liegt darin, dass die ausgesandte n Positionsdaten und/oder der Verweis darauf dem örtlich fixen Meldersockel bzw. der Anschlussbasis und somit dem örtlich fixen Montageort zugeordnet sind.

Erreicht wird dies durch die Zwischenschaltung oder Zwischenanordnung des erfindungsgemässen Meldersockels bzw. der erfindungsgemässen Anschlussbasis zwischen Montagefläche und dem aufzunehmenden Gefahrenmelder im Sinne eines Sandwiches. Dadurch können an den erfindungsgemässen Meldersockeln bzw. Anschlussbasen aufgenommene Gefahrenmelder vorteilhaft ausgetauscht werden, ohne dass sich die ausgesandten Positionsdaten des Montageorts und/oder der Verweis darauf ändern.

Dagegen sind die ausgesandten Positionsdaten bei bekannten Gefahrenmeldern mit Funkeinrichtung an den jeweiligen Gefahrenmelder gebunden. Bei Austausch oder Ortsänderung der Gefahrenmelder stimmen dann die ausgesandten Positionsdaten nicht mehr mit den Positionsdaten des neuen Montageorts überein. Als Folge ist eine nachteilig fehlerhafte oder eingeschränkte Positionsbestimmung und Navigation eines Benutzers in einem Gebäude möglich, insbesondere in einem Gefahrenfall.

Ein weiterer grosser Vorteil liegt in der einfachen Nachrüstung einer bereits bestehenden Gefahrenmeldeanlage.

Die Positionsdaten können z.B. absolute GPS-Koordinaten sein. Sie können auch relative GPS-Koordinaten sein, die auf eine absolute Referenz-GPS-Koordinate als Bezugspunkt bezogen sind, wie z.B. auf den Haupteingang des Gebäudes oder auf eine Gebäudeecke. Diese absolute Referenz-GPS-Koordinate ist dann vom mobilen Kommunikationsendgerät mit zu berücksichtigen. Vorzugsweise umfassen die Positionsdaten alle drei Raumkoordinaten, so dass jede Position in jedem Stockwerk eines Gebäudes abgebildet werden kann.

Die Positionsdaten sind somit eine datentechnische Abbildung der örtlichen "physischen" Gebäudekoordinaten des aktuellen Montageorts des Meldersockels bzw. der Anschlussbasis. Letztere können z.B. aus einem BIM-System (BIM für "Bildung Information Modelling") ausgeleitet werden. Ein derartiges System dient zur Inventarisierung sämtlicher elektrischer und klimatechnischer Komponenten in einem Gebäude. Es umfasst auch die funktionalen Beziehungen der Komponenten untereinander sowie deren räumliche Beziehungen untereinander.

Der Verweis kann z.B. eine sogenannte URI (für "Uniform Resource Identifier) sein, welche eine abstrakte oder physische Ressource im Internet identifiziert. Eine derartige Ressource kann z.B. eine URL (für Uniform Resource Locator) oder eine Webadresse sein. Insbesondere referenziert dieser Verweis eine über das Internet oder über ein Intranet datentechnisch erreichbare Datenbank. In der Datenbank sind dann zum jeweiligen Verweis die eigentlichen Positionsdaten abrufbar. Die Datenbank ist im einfachsten Fall eine Tabelle. Diese Datenbank ist dann durch ein mobiles internetfähiges Kommunikationsendgerät erreichbar, wie z.B. über eine WLAN-Datenverbindung im Gebäude und/oder über ein im Gebäude erreichbares Mobilfunknetz. Die Datenbank kann alternativ auch im mobilen Kommunikationsendgerät gespeichert sein.

Alternativ oder zusätzlich kann in der Steuereinheit eine vorrichtungsspezifische Kennung gespeichert sein, wie z.B. eine ID, eine Busadresse oder Seriennummer, über welche dann die eigentlichen Positionsdaten referenziert werden können. Über die vorrichtungsspezifische Kennung kann alternativ auch eine Datenbank mit den eigentlichen Positionsdaten referenziert werden. Die Datenbank kann wiederum im mobilen Kommunikationsendgerät selbst gespeichert sein oder über das Internet oder über ein Intranet durch ein internetfähiges mobiles Kommunikationsendgerät referenziert werden.

Zur Nachrüstung einer bereits bestehenden Gefahrenmeldeanlage werden die Gefahrenmelder der Gefahrenmeldeanlage in einem ersten Schritt vom jeweiligen Montagesockel abgenommen. Es werden dann in einem zweiten Schritt die Positionsdaten, welche die Gebäudekoordinaten des aktuellen Montageorts der Anschlussbasis abbilden bzw. repräsentieren, an die Funkeinrichtung der Anschlussbasis übertragen und dort als auszusendende Positionsdaten gespeichert. Alternativ oder zusätzlich kann auch ein Verweis auf diese Positionsdaten an die Funkeinrichtung übertragen und dort als auszusendender Verweis gespeichert werden. Im dritten Schritt werden vorzugsweise die zuvor abgenommenen Gefahrenmelder auf die jeweilige Anschlussbasis angebracht. Gegebenenfalls wird nach Anbringung des letzten Gefahrenmelders die gesamte Gefahrenmeldeanlage wieder in Betrieb genommen bzw. neu gestartet.

Die zuvor beschriebenen zweiten und dritten Schritte können in ihrer Reihenfolge auch umgekehrt sein.

Die Anschlussbasis ist vorzugsweise konstruktiv und elektrisch derart ausgestaltet, dass diese lösbar am Montagesockel, wie z.B. im Sinne eines Bajonette-Verschlusses, anbringbar ist und dass ein aufzunehmender Gefahrenmelder derart konstruktiv und elektrisch ausgestaltet ist, dass dieser lösbar, wie z.B. im Sinne eines Bajonette-Verschlusses, an der Anschlussbasis anbringbar ist.

Nach einer bevorzugten Ausführungsform der Anschlussbasis ist die dritte Anschlussseite im Wesentlichen identisch zur ersten Anschlussseite und die vierte Anschlussseite im Wesentlichen identisch zur zweiten Anschlussseite ausgestaltet ist. Mit "im Wesentlichen identisch" ist gemeint, dass geringfügig konstruktive Unterschiede, welche keinen funktionalen Einfluss auf die Anbringung und insbesondere auf die lösbare Anbringung haben, unberücksichtigt bleiben können.

Einer weiteren Ausführungsform zufolge weist die erfindungsgemässe Vorrichtung, d.h. der Meldersockel bzw. die Anschlussbasis, eine über die Melderlinie signal- oder datentechnisch auslösbare optische und/oder akustische Alarmierungseinheit auf. Die optische Alarmierungseinheit kann z.B. ein Alarmblitzer auf LED- oder Xenon-Basis sein. Derartige optische Alarmierungseinheiten werden auch als "Beacon Base" bezeichnet. Die akustische Alarmierungseinheit kann z.B. ein sogenannter Sounder sein. Letztere kann alternativ oder zusätzlich zur Sprachausgabe ausgebildet sein. Derartige akustische Alarmierungseinheiten werden auch als "Sounder Base" bezeichnet. Kombinationen aus optischen und akustischen Alarmierungseinheiten werden auch als "Sounder Beacon Base" bezeichnet.

Nach einer bevorzugten Ausführungsform ist die Vorrichtung zur elektrischen Energieversorgung der Funkeinrichtung über die Melderlinie ausgebildet. Die Funkeinrichtung ist somit nach Anschluss der Vorrichtung an der Melderlinie gleichfalls zur elektrischen Spannungsversorgung der Funkeinrichtung an der Melderlinie angeschlossen.

Alternativ oder zusätzlich kann die erfindungsgemässe Vorrichtung einen Energiespeicher zur Pufferung der elektrischen Spannungsversorgung aufweisen, wie z.B. einen Kondensator, eine Batterie als Primärzelle und/oder einen Akkumulator als Sekundärzelle. Dadurch sind eine unterbrechungsfreie Spannungsversorgung und ein Betrieb der Funkeinrichtung auch bei elektrischem Ausfall der Melderlinie weiterhin möglich.

Nach einer besonders vorteilhaften Ausführungsform ist die Funkeinrichtung eine Bluetooth-Funkeinrichtung. Sie basiert insbesondere auf dem Bluetooth Low Energy Standard. Eine alternativ gängige Bezeichnung für den Bluetooth Low Energy Standard ist der Bluetooth-Standard 4.0. Der besondere Vorteil liegt hier in der vergleichsweise sehr geringen benötigten mittleren elektrischen Leistung von weniger als 50 mW, insbesondere von weniger 10 mW, zum Betrieb der Funkeinrichtung. Vorzugsweise beträgt die maximale Funksendeleistung 2,5 mW. Gerade die an einer Melderlinie einer Gefahrenmeldeanlage angeschlossenen Gefahrenmelder sind auf eine sehr geringe Leistungsaufnahme von typischerweise weniger als 100 mW ausgelegt, zumal bis zu 100 Gefahrenmelder und mehr gleichzeitig an einer Melderlinie angeschlossen sein können.

Die Funkeinrichtung der erfindungsgemässen Vorrichtung auf Basis des Bluetooth Low Energy Standards ermöglicht eine Datenkommunikation in einem Umkreis der Funkeinrichtung von bis zu 10 m. Auf Basis der Vielzahl von in einem Gebäude angebrachten und räumlich verteilten Gefahrenmeldern bzw. hier der Vorrichtungen ist dann vorteilhaft eine weitgehende räumliche Abdeckung für die Positionsbestimmung und Navigation in einem Gebäude möglich.

Nach einer Ausführungsform kann die erfindungsgemässe Vorrichtung eingerichtet sein, eine Signalisierung eines Gefahrenalarms, wie z.B. eines Brandalarms, auf der Melderlinie zu detektieren und dann die Funkeinrichtung mit höherer mittlerer Sendeleistung anzusteuern, wie z.B. mit einer maximalen Sendeleistung von 10 mW, 25 mW, 50 mW oder 100 mW. Dadurch ist für Einsatzkräfte, wie z.B. für die Feuerwehr, unter Verwendung entsprechend geeigneter mobiler Kommunikationsendgeräte eine zuverlässigere Positionsbestimmung und Navigation im Gebäude möglich.

Nach einer weiteren Ausführungsform der erfindungsgemässen Vorrichtung weist diese einen Schaltungsträger mit einer grossflächigen Masselage als funktechnisches Teil der Funkeinrichtung auf. Die Funkeinrichtung weist eine vorzugsweise auf dem Schaltungsträger angeordnete Funkelektronik sowie eine ringförmig ausgestaltete, zur Masselage beabstandete PIF-Antenne auf. Die PIF-Antenne ist dabei nach bestimmungsgemässer Anbringung der Vorrichtung an der Montagefläche weiter von der Montagefläche entfernt als die Masselage des Schaltungsträgers. Durch die zur Masselage beabstandete PIF-Antenne ist zum einen besonders effektive und eine nach allen Seiten gerichtete Funkabstrahlung möglich. Dadurch ist eine besonders gute funktechnische Erfassung durch ein mobiles Kommunikationsendgerät zur Positionsbestimmung und Navigation eines Benutzers vorteilhaft möglich.

Einer bevorzugten Ausführungsform zufolge weist die Vorrichtung eine signal- und/oder datentechnisch mit der Funkeinrichtung verbundene Steuereinheit auf. In der Steuereinheit, vorzugsweise in einem Mikrocontroller, sind die Positionsdaten, ein Verweis auf eine Datenbank mit diesen Positionsdaten, eine vorrichtungsspezifische Kennung und/oder eine Webadresse gespeichert. Sie sind jeweils dem aktuellen bzw. vorgesehenen Montageort im Gebäude zugeordnet. Die Steuereinheit ist dazu eingerichtet, die zur Ausgabe über Funk an die Funkeinrichtung weiterzuleiten. Die Speicherung der Positionsdaten, des Verweises, der vorrichtungsspezifischen Kennung und/oder der Webadresse kann alternativ auch in einem elektronischen Speicher der Vorrichtung erfolgen, auf den die Steuereinheit datentechnisch Zugriff hat.

Nach einer Ausführungsform weist die Vorrichtung eine signal- und/oder datentechnisch mit der Funkeinrichtung verbundene Steuereinheit auf, welche dazu eingerichtet ist, über die Funkeinrichtung empfangene Positionsdaten, einen empfangenen Verweis auf eine Datenbank mit diesen Positionsdaten und/oder eine empfangene Webadresse auf ihre Gültigkeit hin zu prüfen und diese dann im gültigen Fall in der Steuereinheit abzuspeichern. Dadurch ist vorteilhaft auf einfachem Wege eine datentechnische Zuordnung des aktuellen vorgesehenen Montageorts der Vorrichtung möglich. Die Zuordnung kann z.B. mit einem entsprechenden Kommunikationsendgerät erfolgen, wie z.B. mit einem Smartphone, einem Tablet-Computer oder einem Notebook erfolgen.

Nach einer besonderen Ausführungsform weist die Vorrichtung eine signal- und/oder datentechnisch mit der Funkeinrichtung verbundene Steuereinheit auf. Die Vorrichtung weist eine Reihe erster elektrischer Kontakte an der ersten Anschlussseite auf, die im aufgenommenen Zustand eines derartigen Gefahrenmelders mit einer Reihe zweiter Kontakte des aufgenommenen Gefahrenmelders an dessen zweiter Anschlussseite kontaktieren. Ein erster Teil der miteinander kontaktierenden Kontakte ist zum zumindest mittelbaren Anschluss an der Melderlinie vorgesehen. Ein zweiter miteinander kontaktierender Teil ist nicht zum Anschluss an der Melderlinie, sondern zur signal- und/oder datentechnischen Verbindung zwischen der Steuereinheit der Vorrichtung und einer Verarbeitungseinheit des aufgenommenen Gefahrenmelders vorgesehen. Diese interne elektrische Verbindung ermöglicht vorteilhaft einen signal- oder datentechnischen Austausch zwischen der erfindungsgemässen Vorrichtung und dem aufgenommenen Gefahrenmelder.

Insbesondere ist die Steuereinheit der Vorrichtung dazu eingerichtet, erste Daten von der Verarbeitungseinheit eines an der Vorrichtung aufgenommenen Gefahrenmelders zu empfangen und diese an die Funkeinrichtung zur Ausgabe über Funk weiterzuleiten. Die ersten Daten weisen insbesondere eine vorrichtungsspezifische Kennung, eine Busadresse, Betriebsparameter und/oder Diagnosedaten des aufgenommenen Gefahrenmelders auf. Auf diese Weise sind durch die Funkeinrichtung der Vorrichtung neben den ausgesandten Positionsdaten und/oder des Verweises auf eine Datenbank mit den Positionsdaten weitere gefahrenmelderspezifische Daten aussendbar. Dadurch kann mittels eines entsprechenden Kommunikationsendgerätes, wie z.B. mittels eines Smartphones, eines Tablet-Computers oder eines Notebooks, z.B. der aktuelle Status oder Diagnosedaten des aufgenommenen Gefahrenmelders im Rahmen von Servicearbeiten erfasst und ausgewertet werden.

Alternativ oder zusätzlich kann die Steuereinheit dazu eingerichtet sein, von der Funkeinrichtung der erfindungsgemässen Vorrichtung über Funk empfangene zweite Daten zu empfangen und diese an die Verarbeitungseinheit eines an der Vorrichtung aufgenommenen Gefahrenmelders weiterzuleiten. Die zweiten Daten sind insbesondere für die Verarbeitungseinheit des aufgenommenen Gefahrenmelders bestimmte Betriebsparameter, Testbefehle und/oder Betriebsprogrammroutinen. Auf diese Weise ist mittels eines entsprechenden Kommunikationsendgerätes, wie z.B. mittels eines Smartphones, eines Tablet-Computers oder eines Notebooks, ein Test oder eine Änderung des Betriebsverhaltens des aufgenommenen Gefahrenmelders möglich. Auch ist es auf diesem Wege möglich, Software- bzw. Firmware-Updates zu der Verarbeitungseinheit des aufgenommenen Gefahrenmelders "einzuspielen". Die Verarbeitungseinheit ist vorzugsweise wiederum ein Mikrocontroller.

Die Aufgabe der Erfindung wird weiterhin durch eine Gefahrenmeldeanlage mit erweiterter Funktionalität zur möglichen funktechnischen Positionsbestimmung und Navigation eines Benutzers in einem Gebäude mittels eines dafür geeigneten mobilen Kommunikationsendgerätes gelöst.

Erfindungsgemäss weist die Gefahrenmeldeanlage eine Zentrale sowie eine Mehrzahl von im Gebäude angebrachten erfindungsgemässen Vorrichtungen zum Aussenden von Positionsdaten des Montageorts der jeweiligen Vorrichtung oder eines Verweises auf eine Datenbank mit diesen Positionsdaten auf. Die Vorrichtungen sind zusammen mit der Zentrale gemeinsam an einer oder an mehreren Melderlinien angeschlossen. Es sind mehrere Gefahrenmelder an den jeweiligen Vorrichtungen zum mittelbaren Anschliessen dieser an der Melderlinie angebracht. Insbesondere sind die mehreren Gefahrenmelder lösbar an den jeweiligen Vorrichtungen angebracht. Sie sind zudem konstruktiv und elektrisch zur Anbringung an die jeweilige Vorrichtung ausgestaltet.

Schliesslich kann die erfindungsgemässe Vorrichtung vorteilhaft zur Positionsbestimmung und Navigation eines Benutzers in einem Gebäude mittels eines mobilen Kommunikationsendgerätes verwendet werden. Das Kommunikationsendgerät ist dann dazu eingerichtet, von den jeweiligen Vorrichtungen ausgesandte Positionsdaten ihres jeweiligen Montageorts oder ausgesandte Verweise auf eine durch das mobile Kommunikationsendgerät funktechnisch erreichbare Datenbank mit diesen Positionsdaten zu empfangen. Es ist zudem dazu eingerichtet, auf Basis dieser Positionsdaten die Positionsbestimmung und Navigation im Gebäude durchzuführen.

Vorzugsweise ist auf dem mobilen Kommunikationsendgerät eine Navigationssoftware installiert, welche dazu geeignet ist, die von einen oder mehreren erfindungsgemässen Vorrichtungen stammenden Positionsdaten zu empfangen. Mittels z.B. einer Triangulationsmessung ist dann die relative Position des mobilen Kommunikationsendgerätes und somit die des Benutzers rechnerisch ermittelbar, der ein solches Kommunikationsendgerät mit sich führt. Die zuvor genannte Navigationssoftware kann z.B. auch als sogenannte "App" über ein Internetportal heruntergeladen werden. In entsprechender Weise kann auch die Datenbank mit den Positionsdaten der Vorrichtungen im Gebäude und/oder ein elektronischer Gebäudeplan zur lokalen Speicherung und Ausführung heruntergeladen werden.

Alternativ kann die Navigationssoftware, die Datenbank mit den Positionsdaten der erfindungsgemässen Vorrichtungen und/oder der elektronische Gebäudeplan über einen Link durch das Kommunikationsendgerät geladen und dann ausgeführt werden. Der Link kann z.B. auch als optisch erfassbarer QR-Code kodiert sein, der mittels einer geeigneten optischen Erkennungssoftware auf dem Kommunikationsendgerät in einen Internet-Link umgesetzt wird. Durch Referenzierung des Internet-Links können dann die Navigationssoftware, die Datenbank mit den Positionsdaten und/oder der elektronische Gebäudeplan geladen werden. Der QR-Code kann z.B. auf einem Aufkleber oder Schild aufgedruckt sein, welcher bzw. welches sich z.B. im Eingangsbereich des Gebäudes befindet. Das Kommunikationsendgerät ist in diesem Fall internetfähig.

Der Gebäudeplan kann dann auf dem Display des mobilen Kommunikationsendgeräts zusammen mit der aktuell ermittelten Position visualisiert werden. Die Navigationssoftware kann zudem dazu ausgebildet sein, eine möglichst kurze oder möglichst schnelle Route für den Benutzer zum Erreichen eines vom Benutzer zuvor eingegebenen Ziels in dem Gebäude zu ermitteln und zu visualisieren.

Die Erfindung sowie vorteilhafte Ausführungen der vorliegenden Erfindung sind am Beispiel der nachfolgenden Figuren ersichtlich. Dabei zeigen
- FIG 1: ein Beispiel für einen erfindungsgemässen Meldersockel zur lösbaren Aufnahme eines dafür vorgesehenen Rauchmelders oder Alarmgebers als Gefahrenmelder,
- FIG 2: ein weiteres Beispiel für einen erfindungsgemässen Meldersockel mit einer integrierten optischen und akustischen Alarmierungseinheit,
- FIG 3: ein Beispiel für eine erfindungsgemässe Anschlussbasis zur Anbringung dieser an einem Montagesockel und zur lösbaren Aufnahme eines dafür vorgesehenen Rauchmelders oder Alarmgebers als Gefahrenmelder,
- FIG 4: ein Prinzipschaltbild zum mittelbaren Anschalten eines Gefahrenmelders an eine Melderlinie über eine zwischengeschaltete erfindungsgemässe Anschlussbasis mit Funkeinrichtung gemäss FIG 3,
- FIG 5: ein Anschlussschema der Anschlussbasis gemäss FIG 4 mit einer internen signal- und/oder datentechnischen Verbindung zwischen Anschlussbasis und aufgenommenen Gefahrenmelder in einer Draufsicht,
- FIG 6: ein Beispiel für eine Gefahrenmeldeanlage gemäss der Erfindung und
- FIG 7: ein weiteres Beispiel für eine Gefahrenmeldeanlage gemäss der Erfindung.

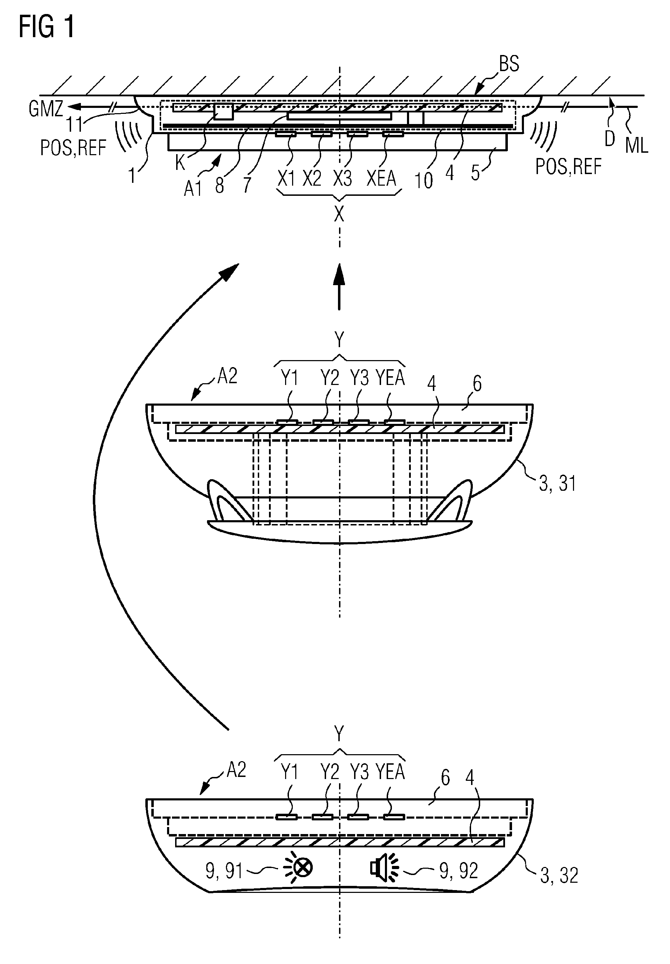

FIG 1 zeigt ein Beispiel für einen erfindungsgemässen Meldersockel 1 zur lösbaren Aufnahme eines dafür vorgesehenen Rauchmelders 31 oder Alarmgebers 32 als Gefahrenmelder 3.

Der gezeigte Meldersockel 1 ist an einer Decke als Montagefläche D angebracht. Mit BS ist die der Montagefläche D zugewandte gegenüberliegende Befestigungsseite bezeichnet, mit dem Bezugszeichen 11 ein Gehäuse des Meldersockels 1. Der Meldersockel 1 weist einen elektrischen Anschluss K, wie z.B. eine Klemme, zum Anschliessen des Meldersockels 1 an einer Melderlinie ML auf. Letztere ist mit einer Zentrale GMZ einer Gefahrenmeldeanlage verbunden.

Der gezeigte Meldersockel 1 weist eine erste Anschlussseite A1 zur lösbaren Anbringung eines als Punktmelder ausgebildeten Gefahrenmelders 3 auf. Im Beispiel der FIG 1 kann wahlweise ein Rauchmelder 31 oder ein Alarmgeber 32 über dessen jeweilige zweite Anschlussseite A2 an dem Meldersockel 1 angebracht werden. Der gezeigte Alarmgeber 32 weist beispielhaft sowohl eine optische Alarmierungseinheit 91 als auch eine akustische Alarmierungseinheit 92 auf. Die erste Anschlussseite A1 ist dabei elektrisch und konstruktiv so auf die zweite Anschlussseite A2 des aufzunehmenden Gefahrenmelders 3 abgestimmt, dass dieser am Meldersockel 1 lösbar anbringbar und über diesen mittelbar an die Melderlinie ML anschliessbar ist. Mit dem Bezugszeichen ist eine Aufnahme 5 des Meldersockels 1 bezeichnet und mit dem Bezugszeichen 6 ein entsprechendes Gegenstück. Nach Anbringung des Gefahrenmelders 3 kontaktieren die sich gegenüberliegenden Reihen X, Y elektrischer Kontakte X1-X3, XEA; Y1-Y3, YEA miteinander.

Erfindungsgemäss weist der Meldersockel 1 eine Funkeinrichtung 10 zum Aussenden von Positionsdaten POS des Meldersockel-Montageorts und/oder eines Verweises REF auf eine Datenbank mit diesen Positionsdaten POS auf. Die Positionsdaten POS sind dem jeweiligen Montageort des Meldersockels 1 zugeordnet. Mit dem Bezugszeichen 7 ist eine Steuereinheit des Meldersockels 1 bezeichnet. Sie ist signal- und/oder datentechnisch mit der Funkeinrichtung 10 verbunden. Letztere ist an einer PIF-Antenne 8 angeschlossen. Die PIF-Antenne 8 ist dabei zu einer nicht weiter gezeigten Masselage des Schaltungsträgers 4 als funktechnisches Teil der Funkeinrichtung 10 beabstandet angeordnet.

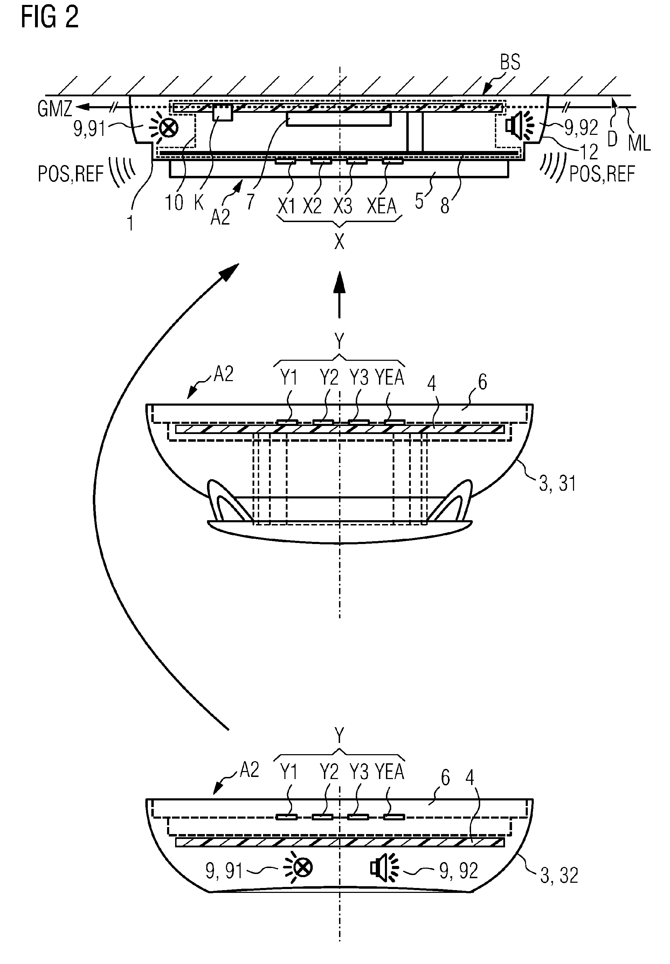

FIG 2 zeigt ein weiteres Beispiel für einen erfindungsgemässen Meldersockel 1 mit einer integrierten optischen und akustischen Alarmierungseinheit 91, 92.

Die FIG 2 unterscheidet sich vom Beispiel der FIG 1 dadurch, dass im Meldersockel 1 zusätzlich eine optische Alarmierungseinheit 91 und eine akustische Alarmierungseinheit 92 im Sinne einer Sounder Beacon Base integriert ist.

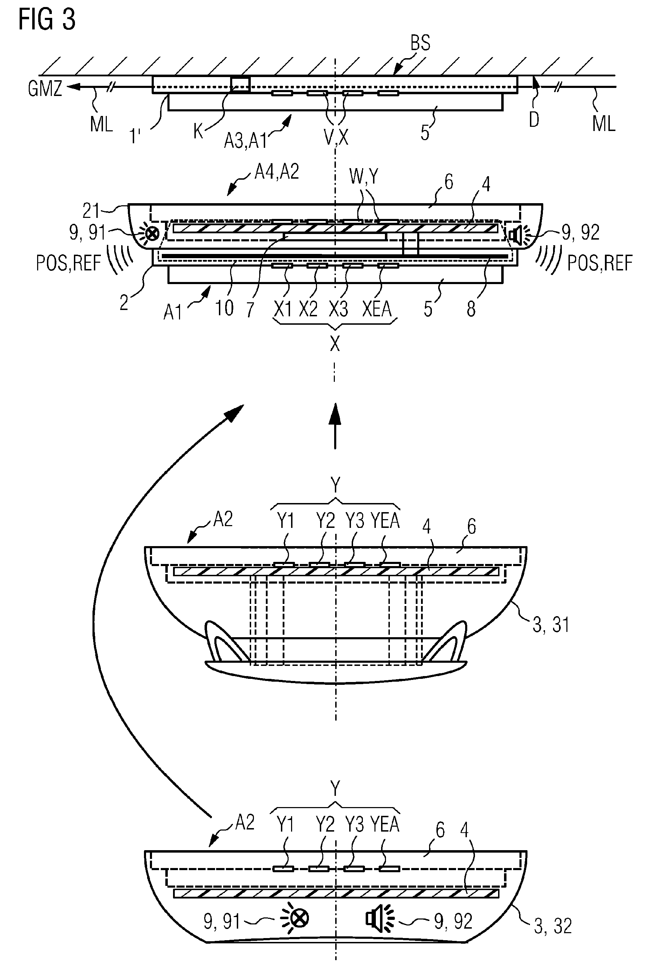

FIG 3 zeigt ein Beispiel für eine erfindungsgemässe Anschlussbasis 2 zur lösbaren Anbringung an einem Montagesockel 1' sowie zur lösbaren Aufnahme eines dafür vorgesehenen Rauchmelders 31 oder Alarmgebers 32 als Gefahrenmelder 3.

Im Vergleich zum Meldersockel 1 gemäss dem Beispiel der FIG 1 und FIG 2 ist die entsprechende Vorrichtung 2, d.h. die gezeigte Anschlussbasis, nun zusätzlich zur Anbringung an dem Montagesockel 1' ausgebildet. Letzterer weist eine dritte Anschlussseite A3 auf, die elektrisch und konstruktiv auf eine vierte Anschlussseite A4 der Anschlussbasis 2 abgestimmt ist, sodass die Anschlussbasis 2 an dem Montagesockel 1' angebracht werden kann. Nach Anbringung der Anschlussbasis 2 kontaktieren dann die sich gegenüberliegenden Reihen V, W elektrischer Kontakte miteinander.

Im Beispiel der FIG 3 ist bereits die dritte Anschlussseite A3 identisch zur ersten Anschlussseite A1 und die vierte Anschlussseite A4 identisch zur zweiten Anschlussseite A2 ausgestaltet. Dies ermöglicht gemäss der Erfindung eine einfache Nachrüstung einer bereits bestehenden Gefahrenmeldeanlage durch Zwischenschalten der gezeigten erfindungsgemässen Anschlussbasis 2.

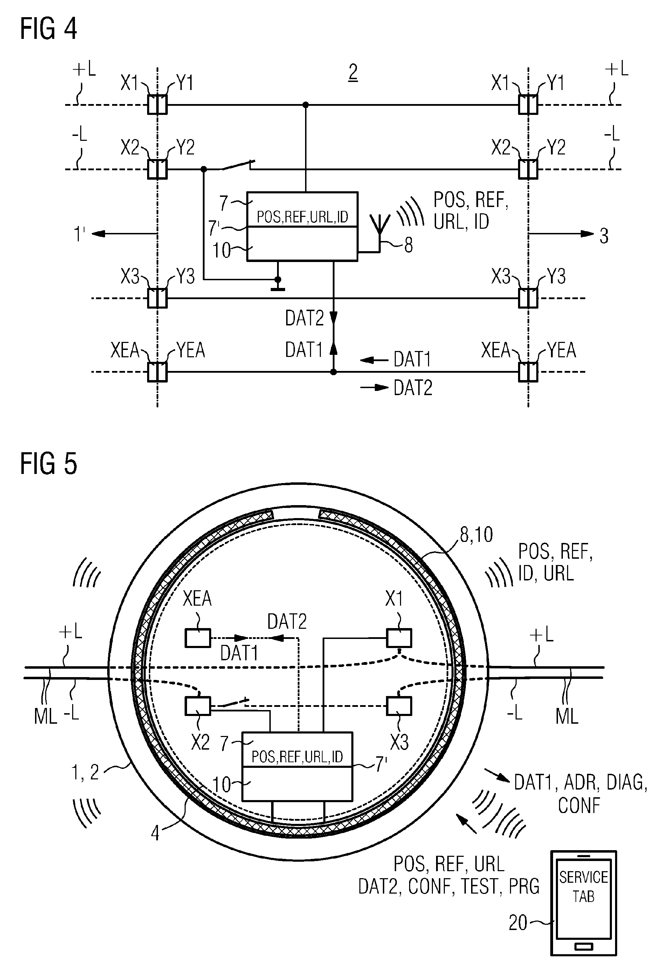

FIG 4 zeigt ein Prinzipschaltbild zum mittelbaren Anschalten eines Gefahrenmelders 3 an eine Melderlinie ML über eine zwischengeschaltete erfindungsgemässe Anschlussbasis 2 mit Funkeinrichtung 10 gemäss FIG 3.

Im linken Teil ist der schaltungstechnische Teil des Montagesockels 1' zu sehen, im mittleren Teil die Anschlussbasis 2 und im rechten Teil ein aufgenommener Gefahrenmelder 3. Die Melderlinie ML ist dabei als Zweidrahtleitung ausgeführt und umfasst die beiden Melderleitungen +L und -L.

Wie die FIG 4 weiter zeigt, ist der Gefahrenmelder 3 mittelbar über die Anschlussbasis 2 an die Melderlinie bzw. an die beiden Melderleitungen +L, -L der Melderlinie ML geschaltet. Über die beiden Melderleitungen +L, -L wird auch die Funkeinrichtung 10 der Anschlussbasis 2 mit elektrischer Energie versorgt, sodass die Funkeinrichtung 10 die von der Steuereinheit 7 der Anschlussbasis 2 enthaltenen Positionsdaten POS, den Verweis REF auf die Positionsdaten POS, eine Webadresse URL und/oder eine vorrichtungsspezifische Kennung ID aussenden kann. Im vorliegenden Beispiel sind die Steuereinheit 7 sowie die Funkeinrichtung 10 zu einer Baueinheit 7' zusammengefasst.

Erfindungsgemäss ist die Steuereinheit 7 nun dazu eingerichtet, erste Daten DAT1 von der Verarbeitungseinheit eines an der Anschlussbasis 2 aufgenommenen Gefahrenmelders 3 zu empfangen und diese an die Funkeinrichtung 10 zur Ausgabe über Funk weiterzuleiten. Die ersten Daten DAT1 weisen insbesondere eine vorrichtungsspezifische Kennung ID, eine Busadresse ADR, Betriebsparameter CONF und/oder Diagnosedaten DIAG des aufgenommenen Gefahrenmelders 3 auf. Wesentlich ist, dass für die Übertragung der ersten Daten DAT1 ein zweiter miteinander kontaktierender Teil XEA, YEA vorgesehen ist, der nicht zum Anschluss an der Melderlinie ML bzw. an den beiden Melderleitungen +L, -L, sondern zur signal- und/ oder datentechnischen Verbindung zwischen der Steuereinheit 7 der Anschlussbasis 2 und einer Verarbeitungseinheit des aufgenommenen Gefahrenmelders 3 vorgesehen ist.

In entsprechender Weise ist auf umgekehrtem Wege die Steuereinheit 7 der Anschlussbasis 2 dazu eingerichtet, von der Funkeinrichtung 10 über Funk empfangene zweite Daten DAT2 zu empfangen und diese an die Verarbeitungseinheit eines an der Anschlussbasis 2 aufgenommenen Gefahrenmelders 3 weiterzuleiten. Die zweiten Daten DAT2 sind insbesondere für die Verarbeitungseinheit des aufgenommenen Gefahrenmelders 3 bestimmte Betriebsparameter CONF, Testbefehle TEST und/oder Betriebsprogrammroutinen PRG.

FIG 5 zeigt ein Anschlussschema der Anschlussbasis 2 gemäss FIG 4 mit einer internen signal- und/oder datentechnischen Verbindung zwischen Anschlussbasis 2 und aufgenommenen Gefahrenmelder 3 in einer Draufsicht.

In dieser Darstellung ist die vorzugsweise ringförmige Ausgestaltung der PIF-Antenne 8 zu sehen. Dadurch ist eine vorteilhafte Rundumabstrahlung der Positionsdaten POS, des Verweises REF auf die Positionsdaten POS, der vorrichtungsspezifischen Kennung ID und/oder der Webadresse URL möglich.

Im rechten unteren Teil der FIG 5 ist ein mobiles Kommunikationsendgerät 20 in Gestalt eines Smartphones zu sehen, welches dazu eingerichtet, über Funk die ersten Daten DAT1 von der erfindungsgemässen Vorrichtung 1, 2 zu empfangen und über Funk die zweiten Daten DAT2 an die erfindungsgemässe Vorrichtung 1, 2 zu senden. Vorzugsweise erfolgt die Datenübertragung auf Basis eines Bluetooth-Standards, insbesondere auf Basis eine Low Energy Bluetooth-Standards.

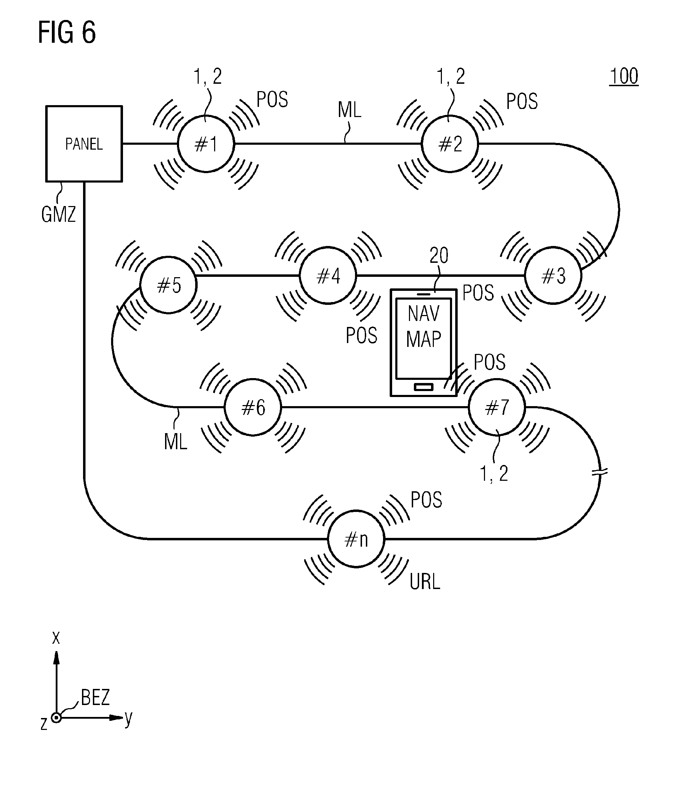

FIG 6 zeigt ein Beispiel für eine Gefahrenmeldeanlage 100 gemäss der Erfindung. Im vorliegenden Beispiel sind die erfindungsgemässen Vorrichtungen 1, 2 räumlich verteilt angeordnet und über eine gemeinsame Melderlinie ML an eine Zentrale GMZ angeschlossen. Im mittleren Teil der FIG 6 ist ein mobiles Kommunikationsendgerät 20 zu sehen, auf welchem eine Navigationssoftware NAV gespeichert und ausgeführt wird. Mit MAP ist ein elektronischer Gebäudeplan bezeichnet, der auf dem Display des Kommunikationsendgeräts 20 zusammen mit der ermittelten Position des Benutzers bzw. des Kommunikationsendgerätes 20 im Gebäude visualisiert wird.

Die gezeigte Anordnung kommt vorteilhaft ohne Internetverbindung aus. Die empfangenen Positionsdaten POS können absolute GPS-Koordinaten sein. Sie können auch relative GPS-Koordinaten sein, die auf eine absolute Referenz-GPS-Koordinate als Bezugspunkt BEZ bezogen sind. Dieser Bezugspunkt BEZ ist im mobilen Kommunikationsendgerät gespeichert und kann dann vom mobilen Kommunikationsendgerät bei der Positionsbestimmung und Navigation mit berücksichtigt werden. Vorzugsweise umfassen die Positionsdaten alle drei Raumkoordinaten, so dass jede Position in jedem Stockwerk eines Gebäudes abgebildet werden kann.

Die gezeigte Anordnung gemäss FIG 6 ist vorteilhaft für Einsatzkräfte im Gefahrenfall, da in diesem Fall mit dem Ausfall einer Internetverbindung durch Stromausfall und Netzüberlastung in einem solchen Gefahrenfall zu rechnen ist. Zugleich bleiben die erfindungsgemässen Vorrichtungen vorteilhaft einsatzfähig. Diese sind normgemäss technisch dazu ausgelegt, in einem Gefahrenfall, wie z.B. bei einem Gebäudebrand, für eine Mindestzeit weiter betriebsfähig zu sein.

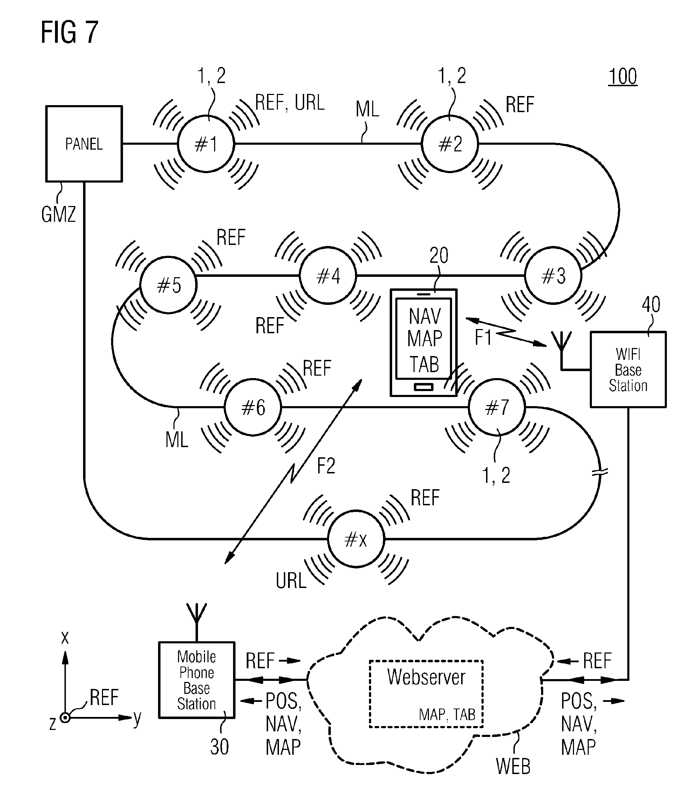

FIG 7 zeigt ein weiteres Beispiel für eine Gefahrenmeldeanlage 100 gemäss der Erfindung. Im Gegensatz zum vorherigen Beispiel erfolgt die Referenzierung der aktuellen Position des Benutzers bzw. des mobilen Kommunikationsendgerätes 20 über einen Verweis REF auf eine Datenbank TAB mit den zugehörigen Positionsdaten POS. Das internetfähige Kommunikationsendgerät 20 ist dabei dazu eingerichtet, über die jeweiligen empfangenen Verweise REF von den verschiedenen Vorrichtungen 1, 2 und über eine funkgestützte Internetverbindung F1, F2 die zugehörige Datenbank TAB im Internet WEB zu referenzieren, und dann die eigentlichen zugehörigen Positionsdaten POS zu laden und auf Basis dieser die tatsächliche Position des Benutzers zu ermitteln. Die funkgestützte Internetverbindung F1, F2 kann dabei über eine WLAN-Station 40 oder über eine Basisstation 30 eines Mobilfunknetzes erfolgen.

### Bezugszeichenliste

- 1: Meldersockel
- 1': Montagesockel
- 2: Anschlussbasis, Base, Sounder Base, Sounder Beacon Base, Beacon Base
- 3: Gefahrenmelder
- 4: Schaltungsträger, Leiterplatte
- 5: Aufnahme
- 6: Gegenstück zur Aufnahme
- 7: Steuereinheit, Mikrocontroller
- 7': Funkelektronik
- 8: Antenne, PIF-Antenne
- 9: Alarmierungseinheit
- 10: Funkeinrichtung, Bluetooth-Sender
- 11,12,21: Gehäuse
- 20: Kommunikationsendgerät, Smartphone
- 30: Mobilfunk-Basisstation
- 31: Rauchmelder, Brandmelder, Hitzemelder
- 32: Sounder, Beacon, Sounder Beacon, Alarmgeber
- 40: WLAN-Basisstation
- 91: optische Alarmierungseinheit
- 92: akustische Alarmierungseinheit, Sounder
- 100: Gefahrenmeldeanlage
- A1: erste Anschlussseite
- A2: zweite Anschlussseite
- A3: dritte Anschlussseite
- A4: vierte Anschlussseite
- ADR: Busadresse
- BS: Befestigungsseite
- CONF: Betriebsparameter
- D: Montagefläche, Decke
- DAT1: erste Daten
- DAT2: zweite Daten
- DIAG: Diagnosedaten
- F1, F2: funkgestützte Internetverbindung
- GMZ: Zentrale, Gefahrenmeldezentrale, Panel
- ID: vorrichtungsspezifische Kennung
- K: elektrischer Anschluss, Klemme
- ML: Melderlinie, Melderbus, Zweidrahtleitung
- NAV: Navigationssoftware
- POS: Positionsdaten, GPS-Koordinaten
- PRG: Betriebsprogrammroutinen
- REF: Verweis
- SERVICE: Service-Software, Inbetriebnahme-Software
- TAB: Datenbank
- TEST: Testbefehle
- URL: Webadresse
- +L: Melderleitung mit positivem Spannungspotenzial
- -L: Melderleitung mit negativem Spannungspotenzial
- X, V: Reihe erster elektrischer Kontakte
- Y, W: Reihe zweiter elektrischer Kontakte
- X1-X3, Y1-Y3, XEA,YEA: elektrische Kontakte
- x,y,z: Raumkoordinaten

## Patentansprüche

1. Meldersockel zur Befestigung an einer Montagefläche (D), mit einem elektrischen Anschluss (K) zum Anschliessen des Meldersockels (1) an einer Melderlinie (ML) einer Gefahrenmeldeanlage (100) sowie mit einer ersten Anschlussseite (A1) zur lösbaren Anbringung eines als Punktmelder ausgebildeten Gefahrenmelders (3), wobei die erste Anschlussseite (A1) elektrisch und konstruktiv auf eine zweite Anschlussseite (A2) eines derartigen Gefahrenmelders (3) abgestimmt ist, sodass dieser am Meldersockel lösbar anbringbar und über diesen mittelbar an die Melderlinie (ML) anschliessbar ist, **dadurch gekennzeichnet, dass** der Meldersockel eine Funkeinrichtung (10) zum Aussenden von Positionsdaten (POS) des Montageorts des Meldersockels und/oder eines Verweises (REF) auf eine Datenbank (TAB) mit diesen Positionsdaten aufweist.

2. Anschlussbasis zur Anbringung an einem Montagesockel (1') sowie zur lösbaren Anbringung eines als Punktmelder ausgebildeten Gefahrenmelders (3) an der Anschlussbasis (2),
- wobei der Montagesockel (1') zum Befestigen an einer Montagefläche (D) und zum Anschliessen an einer Melderlinie (ML) einer Gefahrenmeldeanlage (100) vorgesehen ist,
- wobei die Anschlussbasis eine vierte Anschlussseite (A4) aufweist, welche elektrisch und konstruktiv auf eine dritte Anschlussseite (A3) des Montagesockels (1') abgestimmt ist, sodass die Anschlussbasis am Montagesockel (1') anbringbar und über diesen mittelbar an die Melderlinie (ML) anschliessbar ist, und
- wobei die Anschlussbasis eine erste Anschlussseite (A1) zur Anbringung eines derartigen Gefahrenmelders (3) aufweist, wobei die erste Anschlussseite (A1) elektrisch und konstruktiv auf eine zweite Anschlussseite (A2) eines derartigen Gefahrenmelders (3) abgestimmt ist, sodass dieser an der Anschlussbasis lösbar anbringbar und über diese mittelbar an die Melderlinie (ML) anschliessbar ist,
**dadurch gekennzeichnet, dass** die Anschlussbasis eine Funkeinrichtung (10) zum Aussenden von Positionsdaten (POS) des Montageorts der Anschlussbasis und/oder eines Verweises (REF) auf eine Datenbank (TAB) mit diesen Positionsdaten aufweist.

3. Anschlussbasis nach Anspruch 2, wobei die dritte Anschlussseite (A3) im Wesentlichen identisch zur ersten Anschlussseite (A1) und die vierte Anschlussseite (A4) im Wesentlichen identisch zur zweiten Anschlussseite (A2) ausgestaltet ist.

4. Vorrichtung nach einem der vorherigen Ansprüche, wobei die Vorrichtung (1, 2) eine über die Melderlinie (ML) signal- oder datentechnisch auslösbare optische und/oder akustische Alarmierungseinheit (9) aufweist.

5. Vorrichtung nach einem der vorherigen Ansprüche, wobei die Vorrichtung zur elektrischen Energieversorgung der Funkeinrichtung (10) über die Melderlinie (ML) ausgebildet ist.

6. Vorrichtung nach Anspruch 5, wobei die Vorrichtung einen Energiespeicher zur Pufferung der elektrischen Energieversorgung der Funkeinrichtung (10) aufweist.

7. Vorrichtung nach einem der vorherigen Ansprüche, wobei die Funkeinrichtung (10) eine Bluetooth-Funkeinrichtung ist, insbesondere auf Basis eines Bluetooth Low Energy Standards.

8. Vorrichtung nach einem der vorherigen Ansprüche, wobei die Vorrichtung einen Schaltungsträger (4) mit einer grossflächigen Masselage als funktechnisches Teil der Funkeinrichtung (10) aufweist, wobei die Funkeinrichtung (10) eine vorzugsweise auf dem Schaltungsträger (4) angeordnete Funkelektronik sowie eine ringförmig ausgestaltete, zur Masselage beabstandete PIF-Antenne (8) aufweist, und wobei die PIF-Antenne (8) nach bestimmungsgemässer Anbringung der Vorrichtung an der Montagefläche (D) weiter von der Montagefläche (D) entfernt ist als die Masselage des Schaltungsträgers (4).

9. Vorrichtung nach einem der vorherigen Ansprüche, wobei die Vorrichtung eine signal- und/oder datentechnisch mit der Funkeinrichtung (10) verbundene Steuereinheit (7) aufweist, wobei in der Steuereinheit (7) die Positionsdaten (POS), ein Verweis (REF) auf eine Datenbank (TAB) mit diesen Positionsdaten (POS), eine vorrichtungsspezifische Kennung (ID) und/oder eine Webadresse (URL) gespeichert sind, und wobei die Steuereinheit (7) dazu eingerichtet ist, diese zur Ausgabe über Funk an die Funkeinrichtung (10) weiterzuleiten.

10. Vorrichtung nach einem der vorherigen Ansprüche, wobei die Vorrichtung eine signal- und/oder datentechnisch mit der Funkeinrichtung (10) verbundene Steuereinheit (7) aufweist, welche dazu eingerichtet ist, über die Funkeinrichtung (10) empfangene Positionsdaten (POS), einen empfangenen Verweis (REF) auf eine Datenbank (TAB) mit diesen Positionsdaten (POS) und/oder eine empfangene Webadresse (URL) auf ihre Gültigkeit hin zu prüfen und diese im gültigen Fall in der Steuereinheit (7) oder in einem damit verbundenen Speicher abzuspeichern.

11. Vorrichtung nach einem der vorherigen Ansprüche, wobei die Vorrichtung eine signal- und/oder datentechnisch mit der Funkeinrichtung (10) verbundene Steuereinheit (7) aufweist, wobei die Vorrichtung eine Reihe erster elektrischer Kontakte (X) an der ersten Anschlussseite (A1) aufweist, die im aufgenommenen Zustand eines derartigen Gefahrenmelders (3) mit einer Reihe zweiter Kontakte (Y) des aufgenommenen Gefahrenmelders (3) an dessen zweiter Anschlussseite (A2) kontaktieren, wobei ein erster Teil (X1-X3, Y1-Y3) der miteinander kontaktierenden Kontakte (X, Y) zum zumindest mittelbaren Anschluss an der Melderlinie (ML) vorgesehen ist und wobei ein zweiter miteinander kontaktierender Teil (XEA, YEA) nicht zum Anschluss an der Melderlinie (ML), sondern zur signal- und/ oder datentechnischen Verbindung zwischen der Steuereinheit (7) der Vorrichtung und einer Verarbeitungseinheit des aufgenommenen Gefahrenmelders (3) vorgesehen ist.

12. Vorrichtung nach Anspruch 11, wobei die Steuereinheit (7) dazu eingerichtet ist, erste Daten (DAT1) von der Verarbeitungseinheit eines an der Vorrichtung aufgenommenen Gefahrenmelders (3) zu empfangen und diese an die Funkeinrichtung (10) zur Ausgabe über Funk weiterzuleiten, wobei die ersten Daten (DAT1) insbesondere eine vorrichtungsspezifische Kennung (ID), eine Busadresse (ADR), Betriebsparameter (CONF) und/oder Diagnosedaten (DIAG) des aufgenommenen Gefahrenmelders (3) aufweisen.

13. Vorrichtung nach Anspruch 11 oder 12, wobei die Steuereinheit (7) dazu eingerichtet ist, von der Funkeinrichtung (10) über Funk empfangene zweite Daten (DAT2) zu empfangen und diese an die Verarbeitungseinheit eines an der Vorrichtung aufgenommenen Gefahrenmelders (3) weiterzuleiten, wobei die zweiten Daten (DAT2) insbesondere für die Verarbeitungseinheit des aufgenommenen Gefahrenmelders (3) bestimmte Betriebsparameter (CONF), Testbefehle (TEST) und/oder Betriebsprogrammroutinen (PRG) aufweisen.

14. Gefahrenmeldeanlage mit erweiterter Funktionalität zur möglichen funktechnischen Positionsbestimmung und Navigation eines Benutzers in einem Gebäude mittels eines dafür geeigneten mobilen Kommunikationsendgerätes (20),
- wobei die Gefahrenmeldeanlage eine Zentrale (GMZ) sowie eine Mehrzahl von im Gebäude angebrachten Vorrichtungen (1, 2) nach einem der vorherigen Ansprüche zum Aussenden von Positionsdaten (POS) des Montageorts der jeweiligen Vorrichtung (1, 2) oder eines Verweises (REF) auf eine Datenbank (TAB) mit diesen Positionsdaten (POS) aufweist,
- wobei die Vorrichtungen (1, 2) zusammen mit der Zentrale (GMZ) gemeinsam an einer oder an mehreren Melderlinien (ML) angeschlossen sind und
- wobei mehrere Gefahrenmelder (3) an den jeweiligen Vorrichtungen (1, 2) zum mittelbaren Anschliessen dieser an der Melderlinie (ML) angebracht sind.

15. Verwendung einer Vorrichtung nach einem Ansprüche 1 bis 13 zur Positionsbestimmung und Navigation eines Benutzers in einem Gebäude mittels eines mobilen Kommunikationsendgerätes (20), wobei das Kommunikationsendgerät (20) dazu eingerichtet ist, von den jeweiligen Vorrichtungen (1, 2) ausgesandte Positionsdaten (POS) ihres jeweiligen Montageorts oder ausgesandte Verweise (REF) auf eine durch das mobile Kommunikationsendgerät (20) funktechnisch erreichbare Datenbank (TAB) mit diesen Positionsdaten (POS) zu empfangen, und welches dazu eingerichtet ist, auf Basis dieser Positionsdaten (POS) eine Positionsbestimmung und Navigation durchzuführen.
